Europäisches Patentamt

European Patent Office

Office européen des brevets

(19)

(11) Publication number: 0 329 428
A2

# (12) EUROPEAN PATENT APPLICATION

(21) Application number: 89301466.2

(22) Date of filing: 15.02.89

(51) Int. Cl.⁴: G 02 F 1/135

(30) Priority: 17.02.88 GB 8803704

(43) Date of publication of application:
23.08.89 Bulletin 89/34

(84) Designated Contracting States: CH DE FR IT LI

(71) Applicant: THE GENERAL ELECTRIC COMPANY, p.l.c.
1 Stanhope Gate
London W1A 1EH (GB)

(72) Inventor: Powell, Michael Anthony
17 Hemmings Court
Maldon Essex (GB)

Latham, Steven George
14 Wolesley Road
Chelmsford Essex (GB)

(74) Representative: Loven, Keith James et al
GEC Patent Dept.(Chelmsford Office) GEC-Marconi
Research Centre West Hanningfield Road
Great Baddow Essex CM2 8HN (GB)

(54) Photoconductive imaging apparatus.

(57) An optically-addressed spatial light modulator comprises an input section having an amorphous silicon photoconductive layer (4), and an interface section comprising a dielectric mirror (6). These layers (4,6) are connected by way of a contiguous intervening polyimide layer (5) which protects the amorphous silicon from damage during manufacture.

FIG. 2.

EP 0 329 428 A2

Bundesdruckerei Berlin

## Description

### Photoconductive Imaging Apparatus

This invention relates to photoconductive imaging apparatus. and is particularly useful in an optically-addressed spatial light modulator.

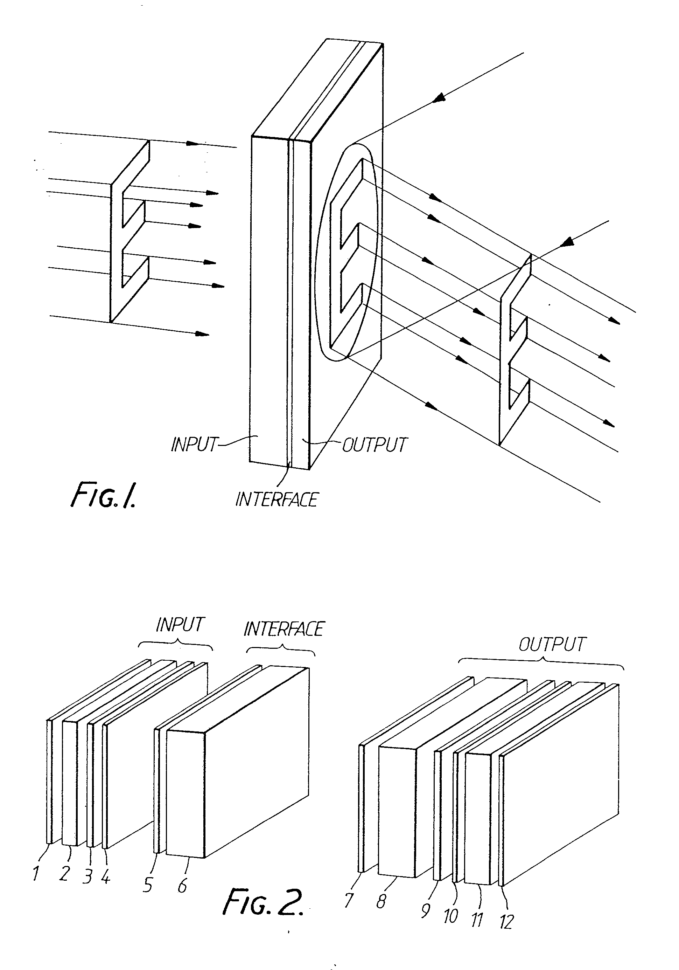

Spatial light modulators are already well-known for their use in one and two dimensional optical processing. As illustrated in Figure 1 of the accompanying drawings, a spatial light modulator (SLM) has a layered structure comprising input, interface and output sections. An optical image is converted at the input section to an internal electrical image by photoconduction, and this electrical image is transmitted across the interface to the output section. The output section converts the electrical image back to an optical image using read light. The interface comprises a dielectric mirror which separates optically the input (or write) and output (or read) sections. The light used to write the image onto the input section is typically of a different wavelength and/or degree of coherence from that of the read light.

The output section typically comprises a liquid crystal cell which develops a pattern of varying birefringence; polarised read light is therefore able to image the pattern by varying the amount of light absorbed in the liquid crystal layer. The SLM operates typically within an AC field applied by way of planar electrodes disposed within the input and output sections.

The quality of the image depends critically on the degree of spatial coherence maintained by the field lines through the thickness of the interface. Ultimately however, spatial coherence depends on the thickness of the layers constituting the input, interface and output sections and some divergence inevitably occurs.

Recent advances in SLM technology have led to the use of amorphous silicon (also known as amorphous silicon) as a photoconductive layer in the input section. This material gives a better resolution than previous materials. One major problem, however, with the use of amorphous silicon is its instability when it is bonded to the dielectric mirror (typically a sandwich of alternating layers of magnesium fluoride and zinc sulphide). The dielectric mirror is usually deposited over the amorphous silicon layer at temperatures of about 100°C; this appears to cause an adverse reaction in the surface of the photoconductive amorphous silicon, and to disrupt the surface of the mirror, destroying its quality. Much of the advantage in optical resolution which could be gained by using the amorphous silicon is thus negated by the resultant imperfections in the interface between the amorphous silicon and the dielectric mirror. Further, the use of high temperatures in the deposition process appears to reduce the adhesion between the two layers, so much so that one layer is likely to flake or peel away from the other.

The purpose of the invention is to overcome these problems associated with the use of amorphous silicon as a photoconductive layer in photoconductive imaging apparatus.

The invention provides photoconductive imaging apparatus comprising, as superimposed flat layers bonded together: an amorphous silicon photoconductive layer; a dielectric mirror layer; and an intervening polymeric layer between those layers.

The polymeric layer, preferably a polyimide, has been found to bond especially well both to amorphous silicon and to the materials commonly used in dielectric mirrors, and is also capable of being deposited very thinly so as to minimise its effect on the performance of the apparatus. Highly satisfactory results have been obtained in an SLM incorporating the invention.

Preferably, the polymeric layer is less than 1000nm thick, more preferably less than 500nm thick. A particularly prefered thickness in between 100 and 300nm.

One way in which the invention may be used will now be described by way of example only, with reference to the accompanying schematic drawings, of which:

Figure 1, referred to above, is a perspective view of an SLM illustrating its imaging function; and

Figure 2 is an exploded perspective view, not to scale, of an SLM embodying the invention.

The construction and function of an SLM is well known, and will not be explained in detail. In the example illustrated in Figure 2, an input section, for generating an electrical image in response to an optical image conveyed by write light transmitted through the input section, comprises an anti-reflection coating 1, the thickness of which is selected specifically for a particular wavelength of light which is desired to be transmitted, in this example a thickness of about one micron; a glass faceplate 2 of from 1 to 3 millimetres; an indium-tin oxide layer 3 of about 20 nm to 200nm in thickness; and an amorphous silicon layer 4 of between about 0.5 and 4 microns or thicker.

An interface section, for conveying the electrical image from the input to the output section while reflecting or absorbing the write light transmitted through the input section and read light transmitted through an output section to which it is adjacent, comprises a very thin interface layer 5 of polyimide of about 200 nm, and a 22 layer dielectric mirror 6, about 1 micron thick, consisting of alternating layers of magnesium fluoride and zinc sulphide. (One alternative to this dielectric mirror would be alternating layers of titanium dioxide and silicon dioxide, but this results in a thicker mirror, giving a poorer performance).

The output section, responsive to the write light to produce an output image corresponding to the electrical image, comprises a twisted nematic cell comprising a layer 8 of liquid crystal in its nematic phase, from 2.0 to 2.5 microns thick, bounded by a pair 7,9 of similar plastics alignment layers, about 50 nm thick, for aligning the liquid crystal molecules; an indium-tin oxide layer 10 of about 20 nm, a glass substrate 11 of about 1mm and an anti-reflection coating 12 of about 1 micron in thickness. The SLM is manufactured by bonding the output section to a separately-prepared combination of the input and interface sections. These sections are prepared by the successive deposition of the different layers using conventional processes. The polyimide layer 5 is applied to the complete input section in the form of a drop of liquid consisting of polyimide in a standard solvent. The drop is applied to the centre of the surface of the amorphous silicon layer 4, and the input section is then spun at high speed to spread the polyimide evenly across the surface. The thin film thus produced is then cured by baking at a temperature of 180°C for one hour. The cured interface layer 5 of polyimide appears to act as a protective layer for the amorphous silicon, in that it absorbs any localised energy imparted by molecular collision, particularly at the temperatures of about 100°C at which the dielectric mirror layers are deposited. The same layer also appears to protect the dielectric mirror from damage by the reaction which would otherwise take place when it is deposited.

The adhesion between the amorphous silicon and the mirror also seems to be improved by the protective layer 5.

The interface layer 5 of polyimide is particularly suitable because it is durable and inert, and sufficiently electrically non-conductive that, in such a thin layer, its effect on the spatial resolution of the electrical image conveyed from the input section to the output section is minimal. Although polyimide has been found to be particularly useful, other condensation polymers could be used, provided of course that they have similar properties and that they are compatible with the amorphous silicon and with at least one of the dielectric materials of the dielectric mirror 6. Preferably, as disclosed in our copending British patent application no. 8803702, the polyimide layer 5 acts as a light-blocking layer to improve the optical separation of the input and output sections. For this purpose, it may include a strongly-absorbent dye.

Some of the dimensions of the layers in this example are specific to the intended wavelength range, and of course the invention is equally applicable to devices with different dimensions, although the intervening polymeric layer itself need only be very thin irrespective of the wavelengths used.

## Claims

1. Photoconductive imaging apparatus comprising, as superimposed flat layers bonded together: an amorphous silicon photoconductive layer; a dielectric mirror layer; and an intervening polymeric layer between those layers.

2. Apparatus according to claim 1, wherein the intervening polymeric layer is of a polyimide.

3. Apparatus according to claim 1 or 2, wherein the thickness of the intervening polymeric layer is less than 1000nm.

4. Apparatus according to claim 1 or 2, wherein the thickness of the intervening polymeric layer is less than 500 nm.

5. Apparatus according to claim 3, wherein the thickness of the intervening polymeric layer is between 100 and 300nm.

6. Apparatus according to any preceding claims wherein the amorphous silicon photoconductive layer is bonded at its other face to an indium-tin oxide layer.

7. Apparatus according to any preceding claim, wherein the dielectric mirror layer comprises alternating layers of magnesium fluoride and zinc sulphide.

8. An optically-addressed spatial light modulator comprising photoconductive imaging apparatus according to any preceding claim, the photoconductive layer constituting part of its input section and the dielectric mirror layer constituting its interface section.

9. An optically addressed spatial light modulator according to claim 8, wherein the amorphous silicon is undoped amorphous silicon.

10. A method of manufacturing of photoconductive apparatus forming a layer of amorphous silicon, forming a polymeric layer on said amorphous silicon layer, and forming a dielectric mirror on said polymeric layer.

11. A method according to claim 10, wherein the polymeric layer is a polyimide layer.

Fig. 1.

Fig. 2.